# FASCICULE DE BREVET EUROPEEN

(11) **EP 1 208 025 B1**
(45) Date de publication et mention de la délivrance du brevet: **02.11.2005**
(21) Numéro de dépôt: 00960769.8
(22) Date de dépôt: 31.08.2000
(51) Int. Cl.: B60T 13/57

(54) **SERVOMOTEUR PNEUMATIQUE A AUTO-ASSISTANCE SELECTIVE ET CONTROLEE EN EFFORT**
UNTERDRUCKBREMSKRAFTVERSTÄRKER MIT SELEKTIVER AUTOMATISCHER UND KRAFTGEREGELTER UNTERSTÜTZUNG
PNEUMATIC BOOSTER WITH SELECTIVE AND CONTROLLED STRESS SELF-ASSISTANCE

(30) Priorité: 03.09.1999 FR 9911251
(43) Date de publication de la demande: 29.05.2002
(73) Titulaire: ROBERT BOSCH GMBH, 70469 Stuttgart (DE)
(72) Inventeur: RICHARD, Philippe, F-77500 Chelles (FR); GAUTIER, Jean-Pierre, F-93600 Aulnay-sous-Bois (FR); LACROIX, Stéphane, F-77220 Tournan en Brie (FR); PRESSACO, Pierre, F-93600 Aulnay-sous-Bois (FR); SACRISTAN, Fernando, Cabrils, 08348 Barcelone (ES); SIMON BACARDIT, Juan, 08013 Barcelone (ES); BERTHOMIEU, Bruno, 08003 Barcelone (ES)
(74) Mandataire: Hurwic, Aleksander Wiktor
(86) Numéro de dépôt international: PCT/FR2000/002412
(87) Numéro de publication internationale: WO 2001/017831

(56) Documents cités:
- DE-A- 19 750 514
- US-A- 4 934 249
- US-A- 5 553 530

## Description

La présente invention se rapporte à un servomoteur pneumatique d'assistance au freinage de véhicules automobiles.

Plus précisément, l'invention concerne un servomoteur pneumatique d'assistance au freinage d'après le préambule de la revendication 1.

Des dispositifs de ce type sont bien connus dans l'art antérieur, tel qu'illustré par exemple par les documents de brevets US - A-3 470 697, FR - A-2 532 084, et FR - A-2 658 466.

Le document DE 197 50 514 A montre le préambule de la revendication 1.

De récentes recherches ont montré que bon nombre de conducteurs, confrontés à une situation de freinage d'urgence, sous-estimaient les risques réellement encourus et, après avoir freiné brutalement, relâchaient sensiblement leur effort de freinage dans des circonstances où le maintien d'un effort important était au contraire absolument indispensable pour éviter un accident.

Ce constat a conduit au développement de solutions diverses tendant à pallier l'éventuel comportement défaillant d'un conducteur inexpérimenté ou saisi de panique.

L'invention se situe dans ce contexte et a pour but de proposer une solution simple au problème du maintien d'une force de freinage importante à la suite d'un coup de frein violent.

A cette fin, le servomoteur de l'invention est essentiellement caractérisé en ce que le dispositif d'embrayage unidirectionnel comprend une douille cylindrique susceptible de coulisser librement autour d'une partie avant de la section arrière du plongeur et une clé de verrouillage comportant une ouverture centrale entourant la douille et de diamètre interne légèrement supérieur au diamètre externe de la douille cylindrique et munie d'une première et d'une deuxième portions d'indexation diamétralement opposées par rapport à l'ouverture centrale.

De manière avantageuse, au repos, la clé de verrouillage est en appui, sous l'effet de la sollicitation d'un moyen élastique, sur une partie fixe du servomoteur par l'intermédiaire de la première portion d'indexation, et sur le piston pneumatique par l'intermédiaire de la deuxième portion d'indexation.

De préférence, au repos, la douille est sollicitée en butée vers l'arrière contre un épaulement de la section arrière du plongeur par un moyen élastique.

On pourra prévoir que la section avant du plongeur comporte un palpeur monté coulissant sur l'extrémité avant de la section arrière du plongeur, le palpeur étant susceptible de venir en contact avec le disque de réaction lorsque la douille est sollicitée par la clé de verrouillage en réponse à un actionnement de la tige de commande dont la vitesse est supérieure à une valeur prédéterminée.

Il est avantageux de prévoir que la position arrière de repos du plongeur soit définie par la venue en appui, sous l'action du ressort principal, d'une butée portée par la section arrière du plongeur sur la clé de verrouillage.

On peut alors prévoir que la butée de la section arrière du plongeur soit formée par une goupille s'étendant perpendiculairement à l'axe du plongeur et traversant des ouvertures oblongues pratiquées dans la douille.

On peut également prévoir que la butée de la section arrière du plongeur soit formée d'un épaulement coopérant avec au moins une partie de 1a clé de verrouillage traversant une fente de la douille.

Selon un autre mode de réalisation, la première portion d'indexation de la clé de verrouillage est en appui, en position de repos, sur une pièce intermédiaire elle-même en appui sur une partie fixe du servomoteur.

On pourra alors avantageusement prévoir que le dispositif d'embrayage unidirectionnel soit contenu dans une cartouche constituant la face avant du piston pneumatique, la pièce intermédiaire faisant saillie vers l'arrière hors de la cartouche.

D'autres caractéristiques et avantages de l'invention ressortiront clairement de la description qui en est faite ci-après, à titre indicatif et nullement limitatif, en référence aux dessins annexés, dans lesquels :
- la Figure 1 représente une vue en coupe longitudinale d'un servomoteur connu de l'art antérieur ;
- la Figure 2 représente une vue en coupe longitudinale de la partie centrale arrière d'un servomoteur réalisé conformément a un mode de réalisation de la présente invention ;
- la Figure 3 représente une vue en coupe longitudinale, selon un plan perpendiculaire au plan de coupe de la Figure 2, de la partie centrale arrière du servomoteur de la Figure 2 ;
- la Figure 4 représente une vue en coupe transversale, selon un plan perpendiculaire aux plans de coupe des Figures 2 et 3, du moyeu du servomoteur représenté sur les Figures 2 et 3 ;
- la Figure 5 représente une vue éclatée du plongeur du servomoteur représenté sur les Figures 2 à 4 ;
- la Figure 6 représente une vue en coupe longitudinale de 1a partie centrale arrière d'un servomoteur réalisé conformément a une variante du premier mode de réalisation de la présente invention ;
- la Figure 7 représente une vue en coupe longitudinale, selon un plan perpendiculaire au plan de coupe de la Figure 6, de la partie centrale arrière du servomoteur de 1a Figure 6 ;
- la Figure 8 représente une vue en coupe transversale, selon un plan perpendiculaire aux plans de coupe des Figures 6 et 7, du moyeu du servomoteur représenté sur les Figures 6 et 7 ;
- la Figure 9 représente une vue éclatée du plongeur du servomoteur représenté sur les Figures 6 à 8 ;
- la Figure 10 représente une vue en coupe longitudinale de la partie centrale arrière d'un servomoteur réalisé conformément a un deuxième mode de réalisation de la présente invention ;
- la Figure 11 représente une vue en coupe longitudinale de la partie centrale arrière d'un servomoteur réalisé conformément a une variante du deuxième mode de réalisation de 1a présente invention ;
- la Figure 12 représente une vue éclatée du plongeur du servomoteur représenté sur la Figures 11.
- La figure 13 est une vue de trois-quarts de l'exemple préféré de réalisation de la clé de verrouillage selon la présente invention.
- La figure 14 est une vue en coupe transversale de la figure 13.
- La figure 15 est un détail de la figure 14.

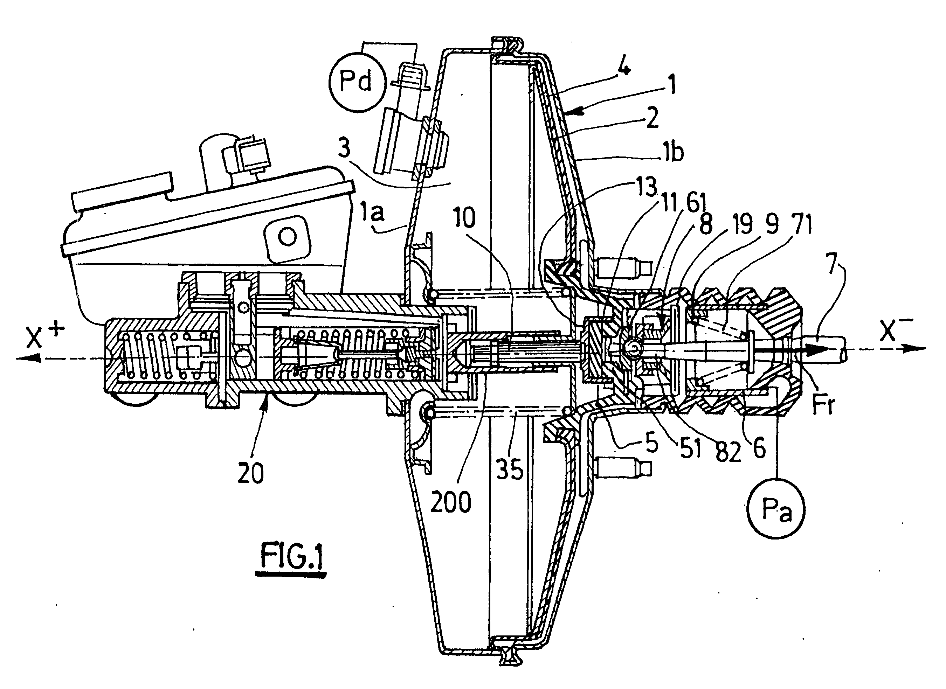

La Figure 1 représente une vue en coupe d'un servomoteur pneumatique d'assistance au freinage prévu pour être placé de façon conventionnelle entre la pédale de frein (non représentée) d'un véhicule et le maître-cylindre 20 commandant la pression dans le circuit de freinage hydraulique de ce véhicule.

Par convention, on appelle "avant" du servomoteur la partie de ce dernier tournée vers le maître-cylindre 20 et "arrière" du servomoteur la partie tournée vers la pédale de frein. Sur la Figure 1, l'avant est ainsi à gauche de 1a Figure et l'arrière à droite.

Le servomoteur pneumatique d'assistance au freinage comprend, de façon connue en soi, une coquille avant 1a et une coquille arrière 1b formant ensemble une enveloppe rigide 1.

Une cloison mobile 2 sépare de façon étanche l'intérieur de cette enveloppe rigide 1 et y délimite une chambre avant 3 et une chambre arrière 4, la chambre avant 3 étant en fonctionnement soumise à une première pression Pd, relativement basse.

Un piston pneumatique 5 se déplace avec la cloison mobile 2 et présente un moyeu 6 monté coulissant dans une ouverture 19 de l'enveloppe 1.

Le servomoteur est commandé par une tige de commande 7 mobile dans le moyeu 6 entre une position de repos illustrée sur 1a Figure 1 et une position d'actionnement extrême, la position de cette tige dans le moyeu dépendant notamment à la fois d'une force d'entrée Fe qui est appliquée sur cette tige, suivant une direction axiale d'actionnement X+, par la pédale de frein (non représentée), de la vitesse avec laquelle est appliquée cette force d'entrée Fe, d'une force de rappel Fr exercée dans la direction inverse X- par un ressort de rappel principal 71, et d'une force de réaction de même sens que la force de rappel.

Lorsque la force d'entrée Fe est appliquée lentement sur la tige de commande 7, cette dernière adopte une position d'actionnement intermédiaire entre sa position de repos illustrée sur la Figure 1 et sa position d'actionnement extrême, la tige de commande n'atteignant sa position d'actionnement extrême que lorsque la force d'entrée Fe est appliquée avec une vitesse supérieure à une vitesse limite donnée.

Un plongeur 8, entraîné par la tige de commande 7, est monté coulissant dans un alésage 61 du moyeu 6 pour contrôler l'état d'un clapet à trois voies 9.

Ce clapet 9 est essentiellement constitué d'un siège fixe annulaire 91 formé à la périphérie interne du moyeu 6, d'un siège mobile annulaire 92, qui est concentrique au siège fixe 91 et porté par une section arrière 82 du plongeur 8, et d'un obturateur tubulaire 93, qui est lui-même concentrique à la fois au plongeur et au moyeu.

L'obturateur tubulaire 93 présente une face frontale annulaire d'obturation destinée à coopérer, en fonction de la position du plongeur 8, soit avec le siège mobile 92, soit avec le siège fixe 91.

De façon connue, lorsque le servomoteur est au repos, comme on l'a représenté sur les Figures, l'obturateur 93 s'applique sur le siège mobile 92 et isole la chambre arrière 4 vis-à-vis d'une source de pression, en général constituée par l'atmosphère, qui délivre une pression Pa supérieure à la pression Pd à laquelle est soumise la chambre avant 3.

En revanche, lorsqu'une force d'entrée Fe sensiblement supérieure à la force de rappel Fr du ressort 71 est exercée sur la tige 7, cette force Fe provoque un déplacement du plongeur 8 vers l'avant dans la direction d'actionnement X+, de sorte que l'obturateur 93 se décolle du siège mobile 92 en s'appliquant sur le siège fixe 91, la chambre arrière 4 se trouvant alors soumise à la pression Pa.

L'admission d'air dans la chambre arrière repousse la cloison mobile 2 dans la direction d'actionnement X+ et engendre une force d'assistance Fa qui s'exerce sur la face avant 51 du piston 5.

La force d'entrée Fe et la force d'assistance Fa sont appliquées conjointement à des organes de transmission de force qui les utilisent pour actionner le maître-cylindre 20, ces organes de transmission de force comprenant des organes de réaction propres à opposer à la force d'entrée Fe une réaction dépendant de la force d'assistance Fa.

Les Figures illustrent un servomoteur qui utilise, de façon connue, un disque de réaction 13 constitué d'un matériau élastomère, logé dans une coupelle 11, et qui reçoit à la fois la force d'entrée Fe transmise par le plongeur 8, et la force d'assistance Fa exercée par la face avant 51 du piston pneumatique 5.

Le disque de réaction 13 oppose à la force d'entrée Fe une réaction qui varie avec la force d'assistance Fa, et la coupelle 11, qui est solidaire d'une tige de poussée 10, transmet au piston hydraulique primaire 200 du maître-cylindre 20 la résultante de ces forces, de la force de rappel Fr, et de la force élastique d'un ressort de rappel de piston 35.

Selon l'invention, le plongeur 8 comporte une section avant 81 et une section arrière 82, 1a section avant 81 du plongeur et les organes de transmission de force comprenant des moyens respectifs de retenue réversible propres à assujettir la section avant 81 au piston pneumatique 5 lorsque la force d'assistance Fa dépasse un seuil S déterminé alors que la tige de commande est dans sa position d'actionnement extrême.

La section avant 81 du plongeur 8 comporte principalement une douille cylindrique 18, susceptible de coulisser librement autour d'une partie avant de la section arrière 82 du plongeur 8. La section avant 81 comporte également un palpeur 17, monté coulissant sur l'extrémité avant de la section arrière 82, le palpeur 17 étant susceptible de venir en contact avec le disque de réaction 13.

La douille 18 est susceptible de se déplacer entre un épaulement de la section arrière 82 du plongeur et l'extrémité arrière du palpeur 17.

Au repos, la douille 18 est sollicitée en butée vers l'arrière contre l'épaulement de la section arrière 82 par un moyen élastique 21, tel qu'un ressort hélicoïdal de compression, prenant par ailleurs appui sur un épaulement du piston pneumatique 5, et disposé autour du palpeur 17.

Une clé de verrouillage 31 est disposée autour de la section avant 81 du plongeur 8. Elle comporte une ouverture centrale 32 de diamètre interne légèrement supérieur au diamètre externe de la douille cylindrique 18, et deux portions d'indexation 33 et 34 diamétralement opposées par rapport à l'ouverture centrale 32.

La clé de verrouillage 31 est soumise à la sollicitation vers l'arrière exercée par un organe élastique 36 prenant par ailleurs appui sur le piston pneumatique 5, l'organe élastique 36 étant constitué dans ce mode de réalisation par un ressort hélicoïdal de compression en position excentrée par rapport à l'axe X+X-, et situé au voisinage de la portion d'indexation 34.

Sous l'effet de la sollicitation du ressort 36, la clé de verrouillage 31 est en appui, au repos, d'une part sur une partie fixe du servomoteur par l'intermédiaire de la première portion d'indexation 33, et d'autre part sur le piston pneumatique 5 par l'intermédiaire de la deuxième portion d'indexation 34.

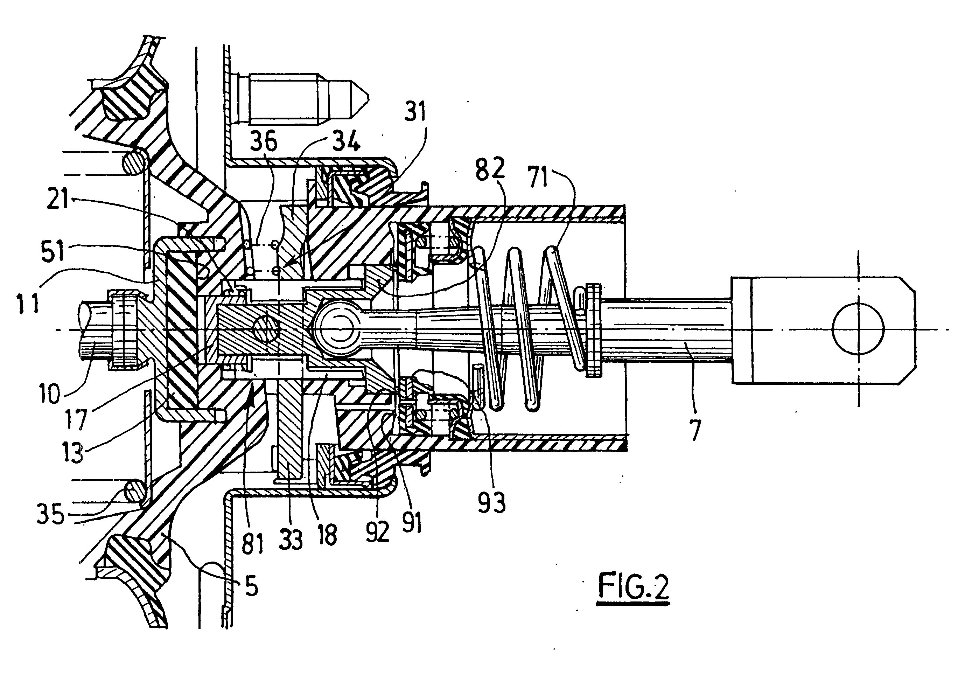

Lorsque le servomoteur est en position de repos, comme on l'a représenté sur la Figure 2, la tige de commande 7 est rappelée vers l'arrière dans la direction de retour X- par la force Fr exercée par un ressort 71. La position arrière de repos de la tige de commande 7, et du plongeur 8 dont la section arrière 82 est montée rotulante sur l'extrémité avant de la tige de commande 7, est définie par la clé de verrouillage 31.

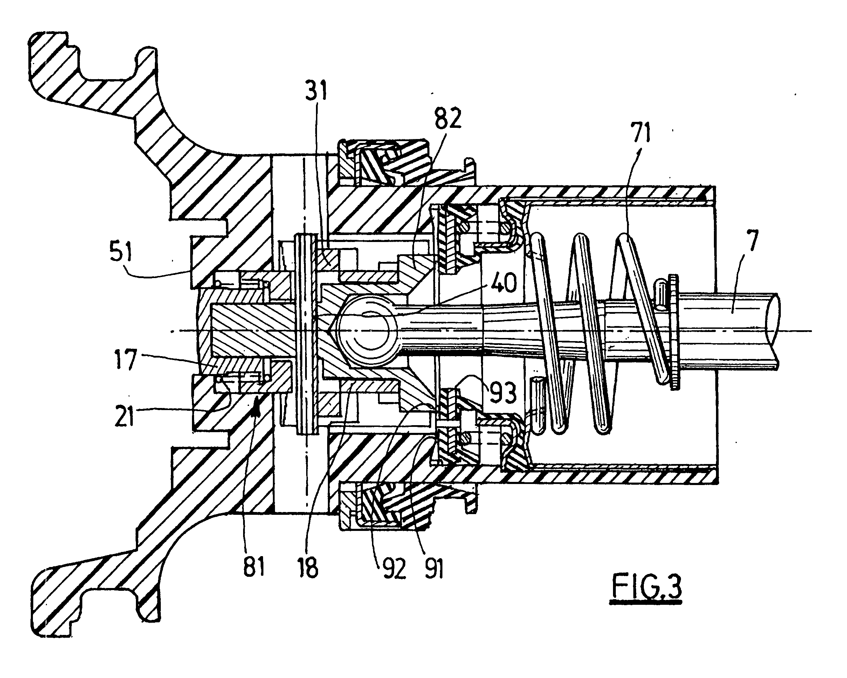

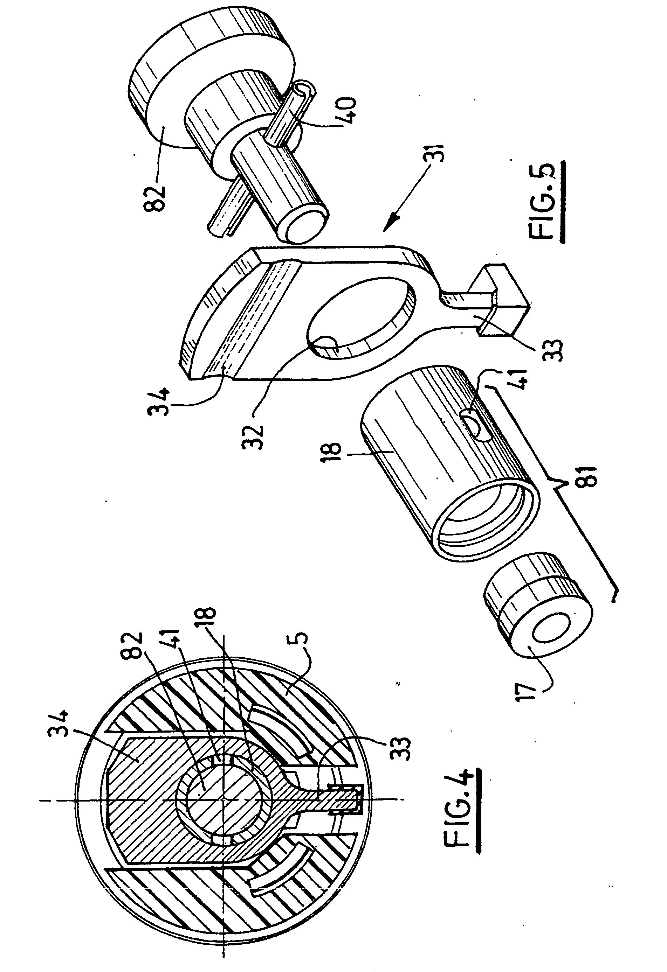

De manière plus précise, dans le mode de réalisation des Figures 2 à 5, la section arrière 82 du plongeur 8 est traversée par une goupille 40, s'étendant perpendiculairement à l'axe du plongeur, et traversant des ouvertures oblongues 41 pratiquées dans la douille 18 (Figure 5).

De la sorte, le ressort de rappel 71 exerce sur la tige de commande 7 une force dirigée vers l'arrière, transmise par la section arrière du plongeur 82 et la goupille 40, à la clé de verrouillage 31, qui se trouve ainsi en appui au repos à la fois sur le piston pneumatique 5 et sur une partie fixe du servomoteur. La clé de verrouillage 31 joue donc ainsi simultanément le rôle de clé d'arrêt du plongeur 8 dans sa course vers l'arrière, en définissant sa position au repos par rapport au piston pneumatique 5, la position au repos de ce dernier par rapport au servomoteur étant définie par ailleurs.

Le fonctionnement de l'invention, tel qu'il peut être exposé en référence aux Figures 2 à 5, va maintenant être exposé.

Lorsque le servomoteur est au repos, comme on l'a représenté sur la Figure 2, la tige de commande 7 est tirée en arrière dans la direction de retour X- par la force Fr exercée par le ressort 71, de sorte que le siège annulaire mobile 92 s'applique sur l'obturateur 93.

Dans ces conditions, la chambre arrière 4 communique avec la chambre avant 3 et se trouve isolée vis-à-vis de la pression atmosphérique Pa. Dans cette position de repos, le ressort 21 maintient la douille 18 en position arrière, en butée sur la section arrière 82 du plongeur 8, de sorte qu'il existe un jeu J entre l'épaulement de la douille sur lequel prend appui le ressort 21 et 1a partie arrière du palpeur 17. Ce jeu J est supérieur à la distance qui sépare l'obturateur 93 du siège fixe 91, distance correspondant à la course morte du servomoteur. L'extrémité avant du palpeur 17 est elle-même située à une distance de la face arrière du disque de réaction supérieure au jeu J.

Comme on l'a vu plus haut, si une force d'entrée Fe, sensiblement supérieure à la force de rappel Fr du ressort 71, est appliquée sur la tige de commande 7, le siège mobile 92 se sépare lentement de l'obturateur 93, ce qui ouvre la chambre arrière 4 à l'atmosphère et provoque le déplacement du plongeur 8 dans la direction d'actionnement X+. L'admission d'air dans 1a chambre arrière repousse la cloison mobile 2 dans la direction d'actionnement X+ et engendre une force d'assistance Fa qui s'exerce sur 1a face avant 51 du piston pneumatique 5.

Dans ce mouvement, le plongeur 8 a entraîné la douille 18 vers l'avant d'une distance correspondant à la course morte du servomoteur, inférieure au jeu J, la douille 18 coulissant elle-même dans l'ouverture de la clé de verrouillage 31.

La force d'assistance Fa est appliquée par le piston pneumatique 5 à la surface annulaire du disque de réaction 13 située autour de la partie avant du palpeur 17. Il en résulte un mouvement vers l'avant du disque de réaction 13, de la coupelle 11, et de la tige de poussée 10 qui actionne le piston primaire 200 du maître-cylindre 20, engendrant une élévation de pression dans ce dernier, et une force de réaction sur la tige de poussée 10, retransmise au disque de réaction 13 par la coupelle 11.

Le disque de réaction 13, comprimé entre la face avant 51 du piston pneumatique 5 et la coupelle 11, voit sa face arrière se bomber et venir en contact du palpeur 17, de sorte que le disque de réaction retransmet la force de réaction engendrée par l'actionnement du maître-cylindre au palpeur 17, au plongeur 8 en contact avec le palpeur 17, et à la tige de commande 7.

Dans ces conditions d'actionnement, le servomoteur fonctionne d'une façon conventionnelle, et le conducteur du véhicule ressent une sensation sur la pédale de frein identique à celle qu'il a l'habitude de ressentir.

Si en revanche une force d'entrée Fe, évoluant de façon rapide, est appliquée sur la tige de commande 7, le siège mobile 92 se sépare de l'obturateur 93 d'une distance supérieure à la course morte du servomoteur et supérieure au jeu J, de sorte que le passage d'air à la pression atmosphérique s'ouvre d'une quantité supérieure à celle d'une action de freinage normale. Cependant, le piston 5 est entraîné dans la direction d'actionnement X-X'+ à une vitesse beaucoup moins grande que celle avec laquelle se déplace le plongeur 8. Dans ces conditions, le plongeur 8 vient au contact de l'extrémité arrière de la douille 18, et le palpeur 17 vient en contact avec le disque de réaction 13, la douille 18 coulissant dans l'ouverture centrale 32 de la clé de verrouillage 31.

Le palpeur 17 comprime alors le disque de réaction 13, qui provoque alors le mouvement de la tige de poussée 10 et l'actionnement du maître-cylindre. Pendant cette première phase d'un actionnement rapide, la force de réaction est ainsi transmise par le disque de réaction et le palpeur au plongeur et à la tige de commande.

Dans une deuxième phase d'actionnement rapide, l'air à la pression atmosphérique ayant pénétré dans la chambre arrière 4 du servomoteur engendre une force d'assistance sur la cloison mobile 2, qui est communiquée au piston pneumatique 5. Celui-ci avance alors dans la direction X+, et exerce cette force d'assistance sur la portion d'indexation 34 de la clé de verrouillage 31. Le piston pneumatique 5 avançant dans la direction X+, la portion d'indexation 33 quitte le contact avec la partie fixe du servomoteur, de sorte que le ressort 36 fait basculer la clé de verrouillage 31 autour de la portion d'indexation 34 en appui sur le piston pneumatique 5.

La clé de verrouillage 31 se coince alors sur la douille 18 et entraîne celle-ci vers l'avant, jusqu'à ce qu'elle rencontre l'extrémité arrière du palpeur 17. Dans cette phase de fonctionnement, le piston pneumatique 5 est entraîné par la cloison mobile 2, et vient confirmer le coincement de la clé de verrouillage 31 sur la douille 18. Le piston pneumatique 5 entraîne alors directement la douille 18 qui entraîne à son tour le palpeur 17, le disque de réaction 13, la coupelle 11 et la tige de poussée 10 qui actionne le maître-cylindre 20. La réaction due à l'actionnement du maître-cylindre est donc transmise par la douille 18 au piston pneumatique 5, et n'est ressentie ni par le plongeur 8, ni par la tige de commande 7, ni par le conducteur, qui bénéficie ainsi d'une action de freinage maximale, même s'il diminue son effort sur la pédale de freinage reliée à la tige de commande 7.

En effet, lorsque la pédale de frein (non représentée) est progressivement relâchée, et bien que la force d'entrée Fe diminue, la clé de verrouillage 31 reste coincée sur la douille 18, aussi longtemps que le siège 92 du clapet ne décolle pas l'obturateur 93 du siège fixe 91, de sorte qu'une force d'assistance maximale continue d'être appliquée au maître-cylindre 20 pendant une telle phase de défreinage. Cette force d'assistance ne cesse en fait d'être appliquée que lorsque le siège 92 du clapet a suffisamment reculé suivant la direction X- pour décoller l'obturateur 93 du siège fixe 91, la chambre arrière 4 étant alors à nouveau reliée à la chambre avant 3. La portion d'indexation 33 de la clé de verrouillage 31 revient alors au contact de la partie fixe du servomoteur, ce qui libère la douille 18, le servomoteur revenant alors à la position de repos représentée sur la Figure 2.

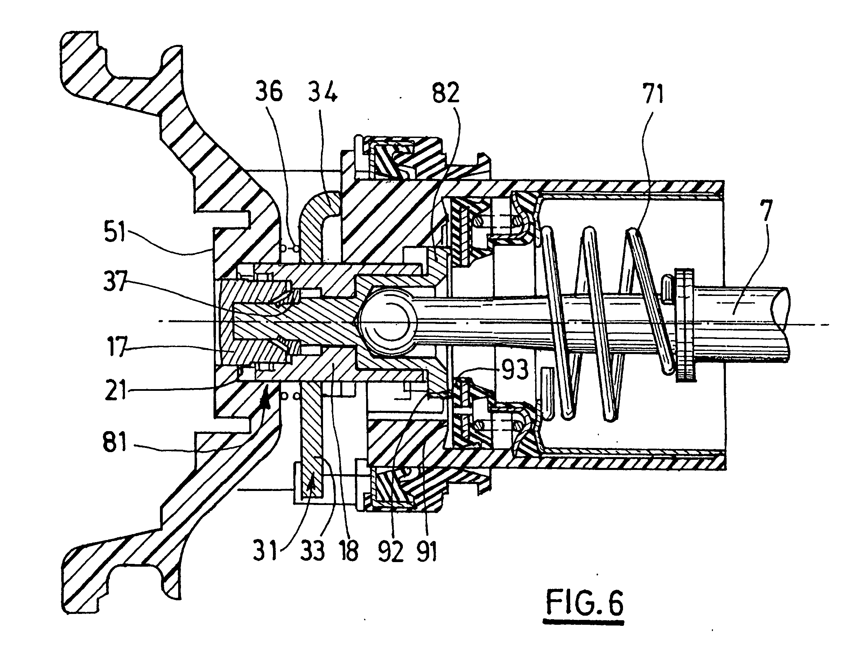

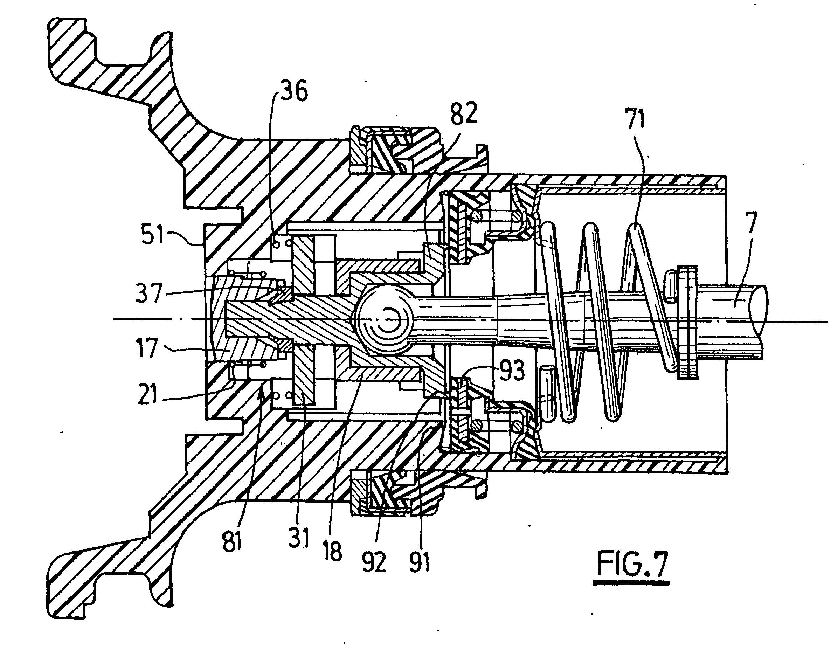

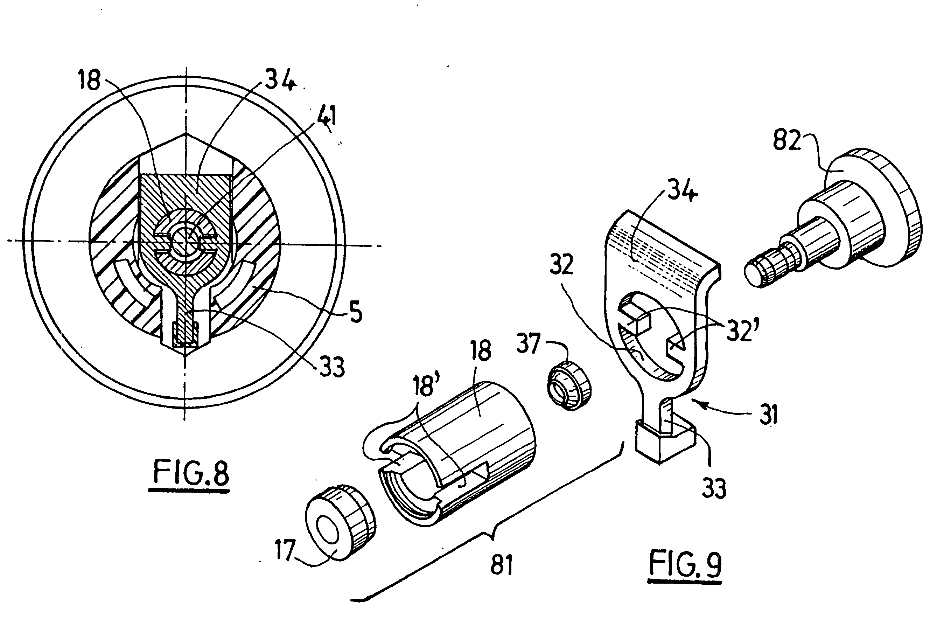

On a représenté sur les Figures 6 à 9 une variante du mode de réalisation décrit jusqu'à présent, dans lequel la clé de verrouillage remplit également la fonction de la goupille 40 décrite précédemment. Pour ce faire, l'ouverture centrale 32 de la clé de verrouillage comporte au moins un bras 32', deux dans la variante de réalisation représentée sur la Figure 9, diamétralement opposés et s'étendant l'un vers l'autre, ces bras 32' passant dans des fentes 18' de la douille 18. Le plongeur 8 est de plus muni d'un épaulement formant une butée 37, par exemple rapportée, destinée à venir en appui, en position de repos, sur les bras 32' pour définir la position arrière de repos du plongeur 8 par rapport au piston pneumatique 5. On voit également que le ressort 36 peut être disposé coaxialement au plongeur 8. Le fonctionnement du servomoteur réalisé selon cette variante est identique à celui qui a été décrit plus haut et ne sera donc pas repris en détail.

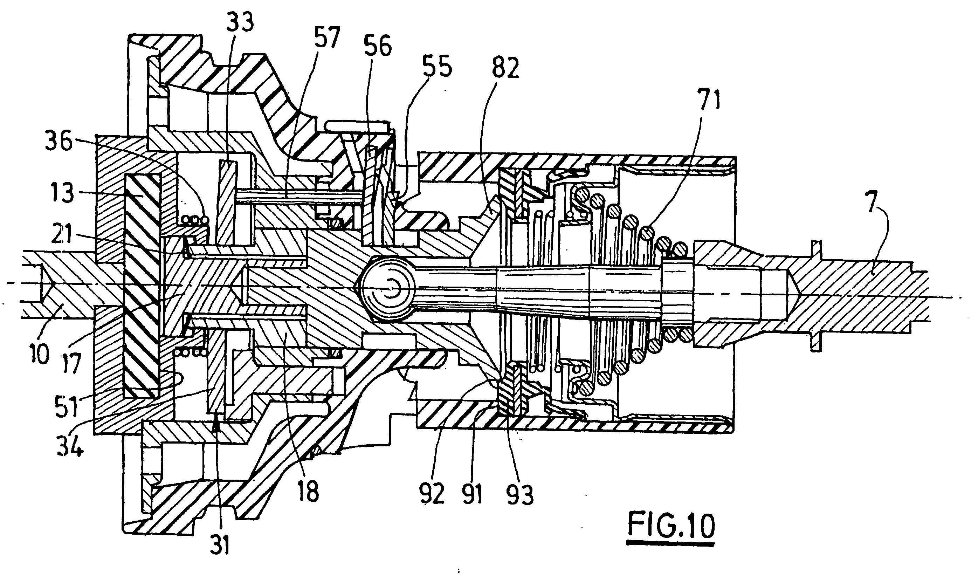

On a représenté sur la Figure 10 un deuxième mode de réalisation de la présente invention. On voit sur la Figure 10 que le servomoteur comporte de manière connue en soi des clés 55 et 56 destinées à définir la position de repos du plongeur 8 par rapport au piston pneumatique 5, une clé étant fixe et l'autre étant basculante. Selon ce mode de réalisation, la portion d'indexation 33 de la clé de verrouillage 31 est en appui sur la clé basculante 56 par l'intermédiaire d'un pion 57, monté à coulissement dans un alésage du piston pneumatique 5, 1a clé basculante 56 étant fixe, en position de repos, par rapport au servomoteur et ne basculant que lors de son fonctionnement. De plus, on voit que le ressort de rappel de la douille 18 peut être réalisé sous forme d'une rondelle Belleville en appui sur une face arrière du palpeur 17.

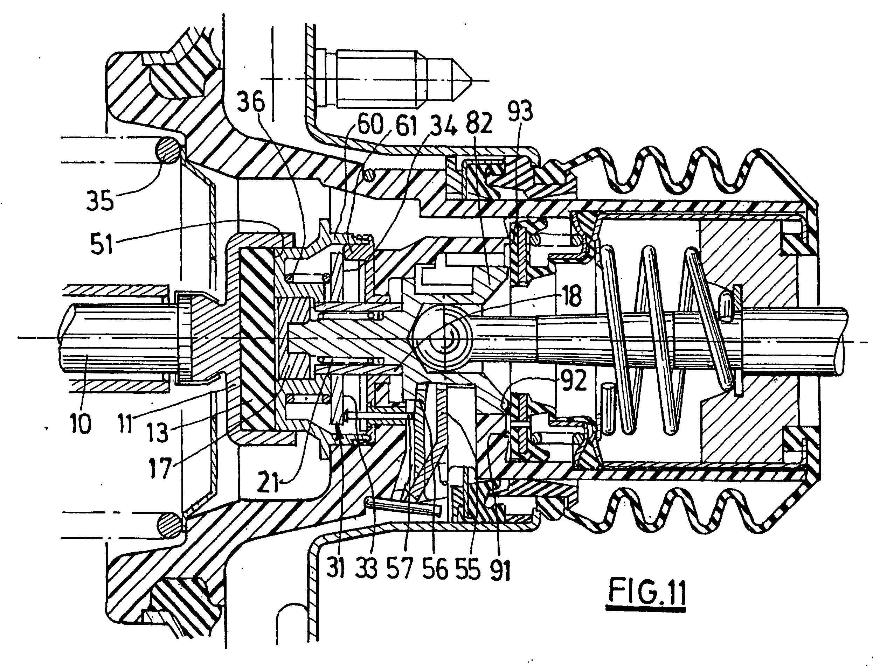

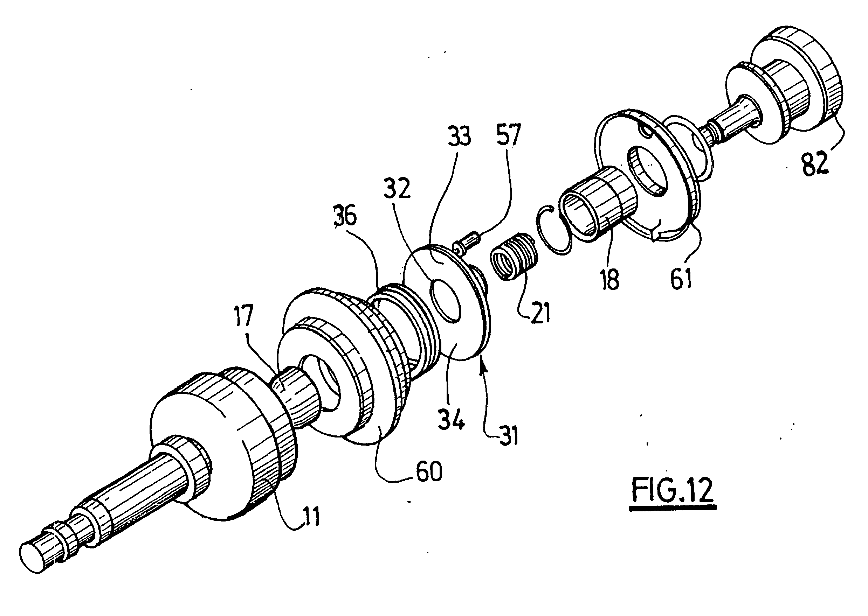

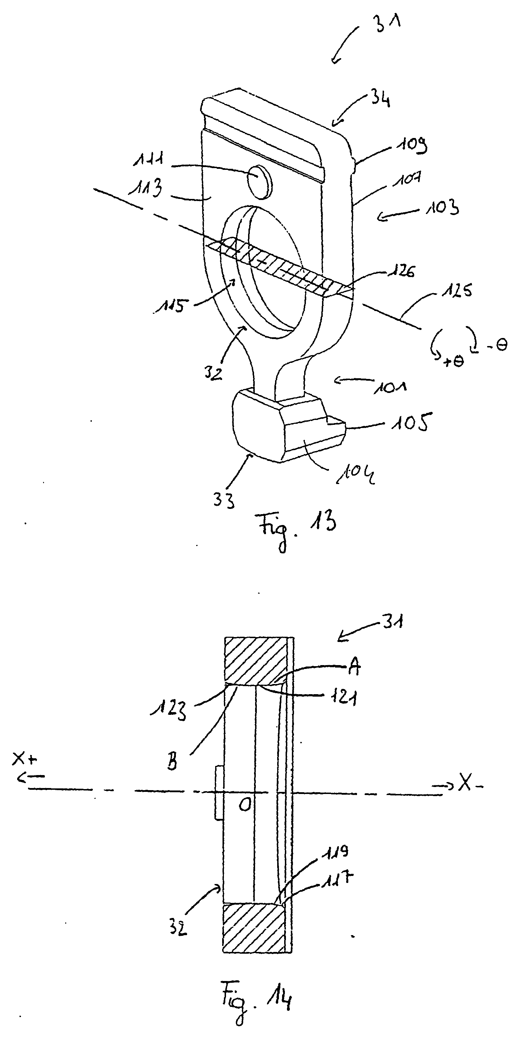

On a représenté sur les Figures 11 et 12 une variante de ce deuxième mode de réalisation. Selon cette variante, une coupelle 60 est disposée dans le piston pneumatique 5, de manière à en constituer la face avant 51. Cette coupelle 60 est fermée à l'arrière par un couvercle 61, prenant lui-même appui sur le piston pneumatique 5. Le couvercle 61 est percé d'une ouverture 62 dans laquelle peut librement coulisser la douille 18, le plongeur 8 étant disposé à l'intérieur de la douille 18 comme on l'a vu plus haut. La coupelle comporte en son intérieur le palpeur 17, les ressorts 21 et 36 et la clé de verrouillage 18, le pion 57 faisant saillie à travers le couvercle 61. L'avantage présenté par cette variante réside dans le fait que le dispositif d'autoassistance selon la présente invention se trouve réuni dans une cartouche, qu'il est possible d'installer dans un servomoteur conventionnel pour lui conférer les caractéristiques de fonctionnement désirées.
On peut voir sur les figures 13 à 15 un exemple préféré de réalisation d'une clé de verrouillage selon la présente invention, la clé (31) comporte à une première extrémité, une première portion d'indexation, à une seconde extrémité, une deuxième portion d'indexation et un orifice central, dont la surface intérieure a une géométrie permettant le verrouillage et le déverrouillage de la clé sur une douille.

Sur la figure 13, on peut voir un exemple de réalisation préférée d'une clé 31 selon 1a présente invention comportant un corps 101 munie à une première extrémité, d'une première portion d'indexation 33 et à une seconde extrémité d'une platine 103. La portion d'indexation 33 est muni d'un moyen d'appui 105, avantageusement formant un angle droit par rapport à l'axe longitudinal de la clé et orienté vers l'arrière , ce moyen est avantageusement surmoulé sur la portion d'indexation 33.
La platine 103 comporte à une première extrémité opposée à une seconde extrémité reliée au corps 101, une seconde portion d'indexation 34. La portion d'indexation 34 comporte sur une face 107, une languette 109 s'étendant d'une première face latérale de la platine à une deuxième face latérale de la platine, s'étendant avantageusement perpendiculairement à l'axe longitudinal de la clé, avantageusement réalisée par emboutissage. La portion 34 comporte également un téton 111 situé sur une face 113 au niveau de l'axe longitudinal de la clé.
La platine 103 comporte également un orifice central 32 ayant un diamètre interne légèrement supérieur au diamètre externe de la douille cylindrique 18.

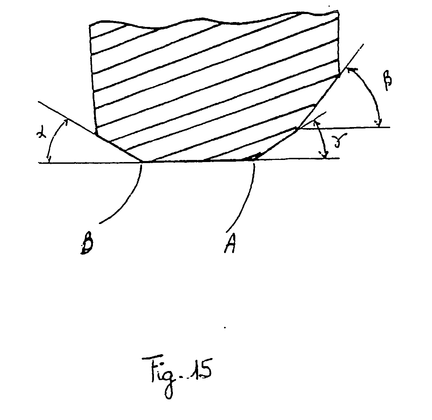

Sur les figures 14 et 15, on peut voir une surface interne 115 de l'orifice 32 constituée d'une succession d'alésages et comporte, dans l'exemple préféré de réalisation de la clé 31 selon la présente invention, disposés dans un sens X+, un premier alésage tronconique 117 de conicité orientée dans le sens X+ et de demi-angle au sommet β, avantageusement β = 30°, un second alésage tronconique 119 de conicité orientée dans le sens X+ et de demi-angle au sommet γ, avantageusement γ = 10° ± 1°, un troisième alésage 121 cylindrique régulier, et un quatrième alésage tronconique 123 de conicité orientée dans le sens X- et de demi-angle au sommet α, avantageusement α = 10° ± 1°. La surface interne 115 permet un basculement dans le sens +θ et dans le sens -θ autour d'un axe 125 transversal passant par O, centre de l'orifice central 32.

Le profil de révolution de la surface interne 115 est avantageusement obtenu par usinage, avantageusement par deux usinages successifs. Le premier usinage a lieu par inclinaison de la clé autour de l'axe 125, d'un angle χ par rapport à un plan de symétrie longitudinale de la clé 31 orthogonal à un plan 126 dans un sens +θ, le second usinage a lieu par inclinaison de la clé dans un sens -θ autour de l'axe 125, d'un angle χ par rapport au plan de symétrie longitudinale de la clé, avantageusement la valeur de χ est 2.5° à ± 0,1°.
La longueur axiale de l'alésage 123 est avantageusement égale à la longueur axiale de l'alésage formé par les alésages 117 et 119 et la longueur axiale de chacun des alésages est choisie pour permettre le verrouillage et le déverrouillage de la clé sur la douille 18.
L'angle de basculement de la clé est avantageusement compris entre [-3,5°±0,6° ; +3,5°±0,6°] par rapport au plan de symétrie longitudinale de la clé pour un diamètre de douille calibrée à 15,05 mm.
La jonction entre les alésages 119 et 121 se fait suivant un filet A et la jonction entre les alésages 121 et 123 se fait suivant un filet B.
La clé 31 est disposée autour de la section avant 81 du plongeur 8, la face 107 du côté de la pédale de frein. La deuxième portion d'indexation 34 de la clé 31 est en appui sur le piston pneumatique 5 au moyen de l'organe élastique 36, avantageusement un ressort hélicoïdal, montée en compression entre le piston pneumatique 5 et la clé 31, le montage du ressort se fait à une première extrémité par une gorge réalisée dans le piston 5 et à une seconde extrémité sur le téton 111. Au repos la première portion d'indexation 33 est en appui sur la partie fixe du servomoteur au moyen de la pièce d'appui 105.
Le verrouillage et le déverrouillage de la clé 31 sur la goupille 18 se fait de la manière suivante.
Le fonctionnement du servomoteur lors d'un freinage d'urgence a été décrit ci-dessus, nous n'allons ici décrire que le verrouillage et le déverrouillage de la clé. Lors du freinage mettant en oeuvre l'auto-assistance, la portion d'indexation 33 quitte son appui sur la partie fixe du servomoteur, le ressort 36 faisant basculer la clé 31 autour de la languette 109 formant pivot, dans le sens +θ, la clé 31 se verrouille sur la douille 18 montée en translation rectiligne dans l'orifice 32 en coopérant avec la périphérie de la douille 18 par arc-boutement des bords de l'orifice central 34, l'arc-boutement se faisant au moins par deux points de contact A' et B' entre la périphérie externe de la douille et la surface interne de l'orifice centrale 32, avantageusement les deux points A' et B' d'arc-boutement se situent respectivement sur les filets A et B, B' étant symétrique à A' par rapport à O.
A la fin du freinage, le déverrouillage de la clé 31 sur la douille 18 a lieu lorsque la portion d'indexation 33 est repoussée par la bague arrière du servofrein.

Cet exemple de réalisation préféré de la clé de verrouillage selon la présente invention ne ralentit pas le retour du piston 5 en position repos en fin de freinage et le système goupille-clé est effectivement déverrouillé au repos. Ces deux conditions fonctionnelles sont réalisées par le choix judicieux de l'angle de basculement clé/douille.

On voit donc bien que, grâce à l'invention, il est possible de maintenir grand ouvert le clapet 9 pendant 1a plus grande partie de 1a phase de défreinage qui suit un freinage d'urgence, donc de continuer à appliquer une force de freinage très supérieure à celle qui serait obtenue, sans l'invention, par l'effort de freinage réellement fourni par le conducteur.

## Revendications

1. Servomoteur pneumatique d'assistance au freinage comprenant : une enveloppe rigide (1); une cloison mobile (2) délimitant, de façon étanche, une chambre avant (3) et une chambre arrière (4) à l'intérieur de l'enveloppe (1), la chambre avant (3) étant en fonctionnement soumise à une première pression (Pd) et la chambre arrière (4) étant sélectivement reliée à la chambre avant (3) ou soumise à une seconde pression (Pa) supérieure à la première (Pd); un piston pneumatique (5) se déplaçant avec la cloison mobile (2); une tige de commande (7) se déplaçant dans le piston (5) en fonction d'une force d'entrée (Fe) sélectivement exercée suivant une direction axiale d'actionnement (X+) orientée vers la chambre avant (3), et d'une force de rappel (Fr) exercée par un ressort principal (71) suivant une direction axiale de retour (X-), inverse de la direction axiale d'actionnement (X+), la force de rappel (Fr) sollicitant la tige de commande (7) vers une position de retour, et la force d'entrée (Fe) sollicitant la tige de commande (7) vers une position d'actionnement intermédiaire ou vers une position d'actionnement extrême, selon que 1a force d'entrée (Fe) est appliquée à une vitesse inférieure ou supérieure à une vitesse limite déterminée; un plongeur (8) logé dans le piston (5) et entraîné par 1a tige de commande (7); un clapet à trois voies (9) comprenant lui-même un siège annulaire (92) porté par une section arrière (82) du plongeur (8), ce clapet (9) reliant 1a chambre arrière (4) à la chambre avant (3) lorsque la tige de commande (7) est en position de repos, et soumettant la chambre arrière (4) à la seconde pression (Pa) lorsque la tige de commande (7) est dans l'une de ses positions d'actionnement; des moyens de transmission de force (10, 13, 17, 18, 31) propres à recevoir et transmettre au moins une force d'assistance (Fa) exercée par une face avant (51) du piston (5) lorsque le clapet (9) soumet la chambre arrière (4) à la seconde pression (Pa), le plongeur (8) comportant une section avant (81) comprenant des moyens de retenue (18, 31) propres à assujettir la section avant (81) du plongeur (8) au piston (5) pneumatique (5), les moyens de retenue comportant un dispositif d'embrayage unidirectionnel (31, 18) assurant l'entraînement des moyens de transmission de force (10, 13, 17) indépendamment de la tige de commande (7) et de la section arrière du plongeur (8) lorsqu'ils sont sollicités par le piston pneumatique (5) en réponse à un actionnement de la tige de commande (7) dont la vitesse est supérieure à une valeur prédéterminée **caractérisée en ce que** le dispositif d'embrayage unidirectionnel (18, 31) comprend une douille cylindrique (18) susceptible de coulisser librement autour d'une partie avant de la section arrière (82) du plongeur (8) et une clé de verrouillage (31) comportant une ouverture centrale (32) entourant la douille (18) et de diamètre interne légèrement supérieur au diamètre externe de la douille cylindrique (18) et munie d'une première et d'une deuxième portions d'indexation (33, 34) diamétralement opposées par rapport à l'ouverture centrale (32).

2. Servomoteur selon la revendication 1, **caractérisé en ce que**, au repos, la clé de verrouillage (31) est en appui, sous l'effet de la sollicitation d'un moyen élastique (36), sur une partie fixe du servomoteur par l'intermédiaire de la première portion d'indexation (33), et sur le piston pneumatique (5) par l'intermédiaire de la deuxième portion d'indexation (34).

3. Servomoteur selon la revendication 1, **caractérisé en ce que**, au repos, la douille (18) est sollicitée en butée vers l'arrière contre un épaulement de la section arrière (82) du plongeur (8) par un moyen élastique (21).

4. Servomoteur selon la revendication 3, **caractérisé en ce que** la section avant du plongeur (8) comporte un palpeur (17) monté coulissant sur l'extrémité avant de la section arrière (82) du plongeur, le palpeur (18) étant susceptible de venir en contact avec le disque de réaction (13) lorsque la douille (18) est sollicitée par la clé de verrouillage (31) en réponse à un actionnement de la tige de commande (7) dont la vitesse est supérieure à une valeur prédéterminée.

5. Servomoteur selon l'une quelconque des revendications 1 à 4, **caractérisé en ce que** la position arrière de repos du plongeur (8) est définie par 1a venue en appui, sous l'action du ressort principal (71), d'une butée (40, 37) portée par la section arrière (82) du plongeur (8) sur la clé de verrouillage (31).

6. Servomoteur selon la revendication 5, **caractérisé en ce que** la butée (40) de la section arrière (82) du plongeur (8) est formée par une goupille (40) s'étendant perpendiculairement à l'axe du plongeur et traversant des ouvertures oblongues (41) pratiquées dans la douille (18).

7. Servomoteur selon la revendication 5, **caractérisé en ce que** la butée (37) de la section arrière (82) du plongeur (8) est formée d'un épaulement (37) coopérant avec au moins une partie (32') de la clé de verrouillage (31) traversant une fente (18') de la douille (18).

8. Servomoteur selon la revendication 2, **caractérisé en ce que** la première portion d'indexation (33) de la clé de verrouillage (31) est en appui, en position de repos, sur une pièce intermédiaire (57) elle-même en appui sur une partie fixe (56) du servomoteur

9. Servomoteur selon la revendication 8, **caractérisé en ce que** le dispositif d'embrayage unidirectionnel (31, 18, 17, 21, 26) est contenu dans une cartouche (60, 61) constituant la face avant (51) du piston pneumatique (5), la pièce intermédiaire (57) faisant saillie vers l'arrière hors de la cartouche (60, 61)

10. Servomoteur pneumatique d'assistance au freinage selon l'une quelconque des revendications précédentes **caractérisé en ce que** la clé de verrouillage (31) comporte à une première extrémité une première portion d'indexation (33), à une seconde extrémité une seconde portion d'indexation (34) et dans sa partie centrale une ouverture (32), l'ouverture (32) comportant une surface interne de profil de révolution apte à coopérer avec la surface externe de 1a douille (18).

## Patentansprüche

1. Pneumatischer Servomotor zur Bremsunterstützung, mit einem starren Gehäuse (1); einer beweglichen Wand (2), die in dichter Weise eine vordere Kammer (3) und eine hintere Kammer (4) im Gehäuse (1) begrenzt, wobei die vordere Kammer (3) im Betrieb einem ersten Druck (Pd) ausgesetzt ist und die hintere Kammer (4) selektiv mit der vorderen Kammer (3) verbunden oder einem zweiten Druck (Pa) ausgesetzt ist, der größer ist als der erste Druck (Pd); einem pneumatischen Kolben (5), der sich mit der beweglichen Wand (2) verlagert; einer Steuerstange (7), die sich im Kolben (5) in Abhängigkeit von einer Eingangskraft (Fe) verlagert, welche selektiv entlang einer axialen Betätigungsrichtung (X+) ausgeübt wird, die zur vorderen Kammer (3) gerichtet ist, und von einer Rückstellkraft (Fr), die durch eine Hauptfeder (71) entlang einer axialen Umkehrrichtung (X-) ausgeübt wird, die zur axialen Betätigungsrichtung (X+) entgegengesetzt ist, wobei die Rückstellkraft (Fr) die Steuerstange (7) in eine Rückstellposition beaufschlagt und die Eingangskraft (Fe) die Steuerstange (7) in eine Betätigungs-Zwischenposition oder in eine Betätigungs-Endposition beaufschlagt, je nachdem, ob die Eingangskraft (Fe) mit einer Geschwindigkeit aufgebracht wird, die kleiner oder größer ist als eine bestimmte Grenzgeschwindigkeit; einem Tauchkolben (8), der im Kolben (5) angeordnet ist und von der Steuerstange (7) angetrieben wird; einem Dreiwegeventil (9), das selbst einen ringförmigen Sitz (92) aufweist, der von einem hinteren Teilstück (82) des Tauchkolbens (8) getragen ist, wobei dieses Ventil (9) die hintere Kammer (4) mit der vorderen Kammer (3) verbindet, wenn sich die Steuerstange (7) in der Ruheposition befindet, und die hintere Kammer (4) dem zweiten Druck (Pa) aussetzt, wenn sich die Steuerstange (7) in einer ihrer Betätigungspositionen befindet; Kraftübertragungsmitteln (10, 13, 17, 18, 31), die dazu geeignet sind, mindestens eine Unterstützungskraft (Fa) zu empfangen und zu übertragen, die von einer Vorderfläche (51) des Kolbens (5) ausgeübt wird, wenn das Ventil (9) die hintere Kammer (4) dem zweiten Druck (Pa) aussetzt, wobei der Tauchkolben (8) ein vorderes Teilstück (81) aufweist, das Haltemittel (18, 31) aufweist, die dazu geeignet sind, das vordere Teilstück (81) des Tauchkolbens (8) am pneumatischen Kolben (5) festzupressen, wobei die Haltemittel eine in eine Richtung wirkende Kupplungsvorrichtung (31, 18) aufweisen, die das Antreiben der Kraftübertragungsmittel (10, 13, 17) unabhängig von der Steuerstange (7) und dem hinteren Teilstück des Tauchkolbens (8) gewährleisten, wenn sie von dem pneumatischen Kolben (5) als Reaktion auf eine Betätigung der Steuerstange (7) beaufschlagt werden, deren Geschwindigkeit höher ist als ein vorbestimmter Wert, **dadurch gekennzeichnet, dass** die in eine Richtung wirkende Kupplungsvorrichtung (18, 31) eine zylindrische Hülse (18) aufweist, die um einen vorderen Teil des hinteren Teilstücks (82) des Tauchkolbens (8) frei gleiten kann, sowie einen Verriegelungsschlüssel (31), der eine mittlere Öffnung (32) aufweist, die die Hülse (18) umgibt und einen Innendurchmesser besitzt, der geringfügig größer ist als der Außendurchmesser der zylindrischen Hülse (18), und der mit einem ersten und einem zweiten Positionierungsabschnitt (33, 34) versehen ist, die bezüglich der mittleren Öffnung (32) diametral entgegengesetzt sind.

2. Servomotor nach Anspruch 1, **dadurch gekennzeichnet, dass** der Verriegelungsschlüssel (31) unter der Wirkung der Beaufschlagung eines elastischen Mittels (36) im Ruhezustand über den ersten Positionierungsabschnitt (33) an einem feststehenden Teil des Servomotors und über den zweiten Positionierungsabschnitt (34) am pneumatischen Kolben (5) anliegt.

3. Servomotor nach Anspruch 1, **dadurch gekennzeichnet, dass** die Hülse (18) im Ruhezustand durch ein elastisches Mittel (21) nach hinten gegen einen Absatz des hinteren Teilstücks (82) des Tauchkolbens (8) in Anschlag beaufschlagt wird.

4. Servomotor nach Anspruch 3, **dadurch gekennzeichnet, dass** das vordere Teilstück des Tauchkolbens (8) einen Taster (17) aufweist, der gleitend am vorderen Ende des hinteren Teilstücks (82) des Tauchkolbens angebracht ist, wobei der Taster (17) mit der Reaktionsscheibe (13) in Kontakt gelangen kann, wenn die Hülse (18) als Reaktion auf eine Betätigung der Steuerstange (7), deren Geschwindigkeit höher ist als ein vorbestimmter Wert, von dem Verriegelungsschlüssel (31) beaufschlagt wird.

5. Servomotor nach einem der Ansprüche 1 bis 4, **dadurch gekennzeichnet, dass** die hintere Ruheposition des Tauchkolbens (8) **dadurch** definiert ist, dass unter der Wirkung der Hauptfeder (71) ein Anschlag (40, 37), der von dem hinteren Teilstück (82) des Tauchkolbens (8) getragen ist, am Verriegelungsschlüssel (31) in Anlage gelangt.

6. Servomotor nach Anspruch 5, **dadurch gekennzeichnet, dass** der Anschlag (40) des hinteren Teilstücks (82) des Tauchkolbens (8) durch einen Stift (40) gebildet ist, der sich senkrecht zur Achse des Tauchkolbens erstreckt und Längsöffnungen (41) durchquert, die in der Hülse (18) ausgebildet sind.

7. Servomotor nach Anspruch 5, **dadurch gekennzeichnet, dass** der Anschlag (37) des hinteren Teilstücks (82) des Tauchkolbens (8) durch einen Absatz (37) gebildet ist, der mindestens mit einem Teil (32') des Verriegelungsschlüssels (31) zusammenwirkt, der einen Spalt (18') der Hülse (18) durchquert.

8. Servomotor nach Anspruch 2, **dadurch gekennzeichnet, dass** der erste Positionierungsabschnitt (33) des Verriegelungsschlüssels (31) in der Ruheposition an einem Zwischenelement (57) anliegt, das selbst an einem feststehenden Teil (56) des Servomotors anliegt.

9. Servomotor nach Anspruch 8, **dadurch gekennzeichnet, dass** die in eine Richtung wirkende Kupplungsvorrichtung (31, 18, 17, 21, 26) in einer Patrone (60, 61) enthalten ist, die die Vorderfläche (51) des pneumatischen Kolbens (5) bildet, wobei das Zwischenelement (57) nach hinten außerhalb der Patrone (60, 61) hervorsteht.

10. Pneumatischer Servomotor zur Bremsunterstützung nach einem der vorhergehenden Ansprüche, **dadurch gekennzeichnet, dass** der Verriegelungsschlüssel (31) an einem ersten Ende einen ersten Positionierungsabschnitt (33) aufweist, an einem zweiten Ende einen zweiten Positionierungsabschnitt (34) und in seinem mittleren Teil eine Öffnung (32), die eine Innenfläche aufweist, deren Rotationsprofil dazu geeignet ist, mit der Außenfläche der Hülse (18) zusammenzuwirken.

## Claims

1. Pneumatic brake booster, comprising: a rigid casing (1); a moving airtight partition wall (2), defining a front chamber (3) and a rear chamber (4) inside the casing (1), the front chamber (3) being operatively under a first pressure (Pd) and the rear chamber (4) being selectively connected to the first chamber (3) or under a second pressure (Pa) higher than the first one (Pd); a pneumatic piston (5) travelling with the moving partition wall (2); a control rod (7), moving inside the piston' (5) as a function of an input force (Fe), selectively exerted in an axial actuation direction (X+) towards the front chamber (3), and of a return force (Fr), applied by a main spring (71) in an axial return direction (X-), the reverse of the axial actuation direction (X+), the return force (Fr) urging the control rod (7) towards a return position, while the input force (Fe) urges the control rod (7) towards an intermediate actuation position or an end actuation position, depending on whether the input force (Fe) is applied at a speed which is lower or higher than a given limit speed; a plunger (8), housed within the piston (5) and driven by the control rod (7); a three-way valve (9), including an annular seat (92) borne by a rear section (82) of the plunger (8), said valve (9) connecting the rear chamber (4) with the front chamber (3) when the control rod (7) is in the rest position, and subjecting the rear chamber (4) to the second pressure (Pa) when the control rod (7) is in one of its actuation positions; force-transmitting means (10, 13, 17, 18, 31), able to receive and transmit at least one boost force (Fa), exerted by a front face (51) of the piston (5) when the valve (9) puts the rear chamber (4) under the second pressure (Pa), the plunger (8) including a front section (81) comprising retaining means (18, 31) intended to secure the front section (81) of the plunger (8) to the pneumatic piston (5), the retaining means comprising a unidirectional clutch device (31, 18) for the driving of the force-transmitting means (10, 13, 17), independently of the control rod (7) and of the rear section of the plunger (8) when they are urged by the pneumatic piston (5), in response to the actuation of the control rod (7), the speed of which is higher than a predetermined value **characterized in that** the unidirectional clutch device (18, 31) comprises a cylindrical sleeve (18), capable of sliding freely around a front part of the rear section (82) of the plunger (8), and a locking key (31) including a central opening (32) surrounding the sleeve (18) and having an inner diameter slightly greater than the outer diameter of the cylindrical sleeve (18), and provided with a first and a second indexing portions (33, 34), diametrically opposed in relation to the central opening (32).

2. Booster according to Claim 1, **characterized in that**, at rest and under the action of a resilient means (36), the locking key (31) bears on a stationary part of the booster via the first indexing portion (33) and on the pneumatic piston (5) via the second indexing portion (34).

3. Booster according to Claim 1, **characterized in that**, at rest, the sleeve (18) is urged backwards into abutment against a shoulder by the rear section (82) of the plunger (8), via a resilient means (21).

4. Booster according to Claim 3, **characterized in that** the front section of the plunger (8) comprises a finger (17), slidingly fitted on the front end of the rear section (82) of the plunger, the finger (17) being capable of coming into contact with the reaction disc (13) when the sleeve (18) is urged by the locking key (31) in response to actuation of the control rod (7), the speed of which is higher than a predetermined value.

5. Booster according to any one of Claims 1 to 4, **characterized in that** the rear rest position of the plunger (8) is defined by the bearing on the locking key (31), under the action of the main spring (71), of a stop (40, 37) borne by the rear section (82) of the plunger (8).

6. Booster according to Claim 5, **characterized in that** the stop (40), located on the rear section (82) of the plunger (8), is constituted by a pin (40) perpendicular to the plunger axis and passing through elongated openings (41) made in the sleeve (18).

7. Booster according to Claim 5, **characterized in that** the stop (37), of the rear section (82) of the plunger (8), consists of a shoulder (37) cooperating with at least one part (32') of the locking key (31), passing through a slot (18') in the sleeve (18).

8. Booster according to Claim 2, **characterized in that**, in the rest position, the first indexing portion (33) of the locking key (31) bears on an intermediate element (57) itself bearing on a stationary part (56) of the booster.

9. Booster according to Claim 8, **characterized in that** the unidirectional clutch device (31, 18, 17, 21, 26) is contained in a cartridge (60, 61), constituting the front face (51) of the pneumatic piston (5), the intermediate element (57) protruding rearward from the cartridge (60, 61).

10. Pneumatic brake booster according to any one of the preceding claims, **characterized in that** the locking key (31) comprises, at a first end, a first indexing portion (33), at a second end, a second indexing portion (34) and, in its central area, an opening (32), the opening (32) having an inner surface with a profile of revolution capable of cooperating with the outer surface of the sleeve (18).
